# EUROPEAN PATENT APPLICATION

(11) **EP 4 512 849 A1**
(43) Date of publication of application: **26.02.2025**
(21) Application number: 23791524.4
(22) Date of filing: 24.02.2023
(51) Int. Cl.: C08G 77/38, C08F 2/50, C08F 4/00, C08G 77/14, C08G 77/30

(54) **PHOTOREACTIVE ORGANOPOLYSILOXANE, METHOD FOR PRODUCING SAME, AND PHOTOCURABLE COMPOSITION**

(30) Priority: 22.04.2022 JP 2022070570
(71) Applicant: SHIN-ETSU CHEMICAL CO., LTD., Tokyo 1000005 (JP)
(72) Inventor: YOSHII, Ryosuke, Annaka-shi, Gunma 379-0224 (JP)
(74) Representative: Mewburn Ellis LLP
(86) International application number: PCT/JP2023/006654
(87) International publication number: WO 2023/203869

(57) **Abstract**

This photoreactive organopolysiloxane has a structural unit ratio represented by formula (1), contains 1-90 mass% of a group having a photopolymerization initiation site, has excellent compatibility to polymerizable organic compounds such as an acrylate compound, and has a photopolymerization initiation site capable of providing photocurability even in atmospheric air.

(R¹₃SiO_{1/2})ₐ(R¹₂SiO_{2/2})_{b}(R¹sio_{3/2})_{c}(SiO_{4/2})_{d} (1)

(In the formula, each R¹ independently represents an alkyl group or an aryl group optionally having a substituent group and respectively including 1-20 carbon atoms or 6-20 carbon atoms, or a group having a photopolymerization initiation site, a represents a number of 0.1-0.8, b represents a number of 0-0.5, c represents a number of 0-0.5, and d represents a number of 0.2-0.9, and a+b+c+d=1 is satisfied.)

## Description

### TECHNICAL FIELD

This invention relates to a photoreactive organopolysiloxane, preparation method, and photocurable composition.

### BACKGROUND ART

Photocurable coating compositions are widely used in the coating of transparent plastic materials because of brief cure at low temperature.

The plastic materials serving as substrates have a lower surface hardness than glass and susceptible to flaw on their surface. Therefore, photocurable coating films are required to have mar resistance and wear resistance.

In this connection, Patent Document 1 discloses that a photocurable coating composition comprising a photopolymerization initiator and a polymerizable compound having a siloxane skeleton gives a photocurable coating having both weather resistance and transparency as well as effective cure.

Also, when photocurable coating compositions are cured in air, photopolymerization initiators must be used in large amounts because oxygen inhibits the coatings from curing.

On the other hand, increased amounts of photopolymerization initiators added result in a lowering of the crosslinking density of coatings. The heavy loading of photopolymerization initiators causes to aggravate mar resistance and wear resistance. The large amounts of photopolymerization initiators added also give rise to problems such as bleed-out of unreacted initiators, which causes the coatings to lose transparency or yellow.

Accordingly, there is the demand for a photopolymerization initiator which enables photo-cure of coatings in air without causing transparency loss or yellowing.

In this regard, Patent Documents 2 and 3 disclose photocurable coating compositions using a surface-active photoinitiator having an incipient photopolymerization site bonded to a silicone skeleton. It is reported that the cured coatings have a large contact angle with water on their surface. There is no tendency that coating hardness is improved. In general, the incorporation of silicone skeleton brings about a degradation of compatibility with acrylic and acrylic urethane coating compositions. In addition, the photoinitiator having the function of surfactant has a possibility to aggravate the outer appearance of coatings due to surface segregation. It is then difficult to increase the amount of the photoinitiator.

### PRIOR ART DOCUMENTS

### PATENT DOCUMENTS

| | |
|---|---|
| Patent Document 1: | JP-A 2016-132713 |
| Patent Document 2: | JP 5068413 |
| Patent Document 3: | JP 4675461 |

### SUMMARY OF INVENTION

### TECHNICAL PROBLEM

An object of the invention, which has been made under the above-mentioned circumstances, is to provide a photoreactive organopolysiloxane which has an incipient photopolymerization site capable of imparting photocurability even in air, and is fully compatible with polymerizable organic compounds such as acrylate compounds, and a photocurable composition which cures into a product having excellent transparency and mar resistance and experiencing little yellowing.

### SOLUTION TO PROBLEM

Making extensive investigations to attain the above object, the inventor has found that a specific photoreactive organopolysiloxane having an incipient photopolymerization site incorporated via a chemical bond is fully compatible with polymerizable organic compounds such as acrylate compounds, and serves as a photopolymerization initiator capable of imparting photocurability even in air, and that a photocurable composition comprising the photoreactive organopolysiloxane cures into a product having excellent transparency and mar resistance and experiencing little yellowing. The invention is predicated on this finding.

Accordingly, the invention provides the following.
1. A photoreactive organopolysiloxane having a constituent unit ratio represented by the formula (1) and containing 1 to 90% by weight of an incipient photopolymerization site-bearing group,

   (R¹₃SiO_{1/2})ₐ(R¹₂SiO_{2/2})_{b}(R¹SiO_{3/2})_{c}(SiO_{4/2})_{d} (1)

   wherein R¹ is each independently an optionally substituted C₁-C₂₀ alkyl or C₆-C₂₀ aryl group or an incipient photopolymerization site-bearing group, a is a number of 0.1 to 0.8, b is a number of 0 to 0.5, c is a number of 0 to 0.5, and d is a number of 0.2 to 0.9, meeting a+b+c+d=1.
2. The photoreactive organopolysiloxane of 1 wherein the incipient photopolymerization site-bearing group is a group having any one of the formulae (2) to (7): 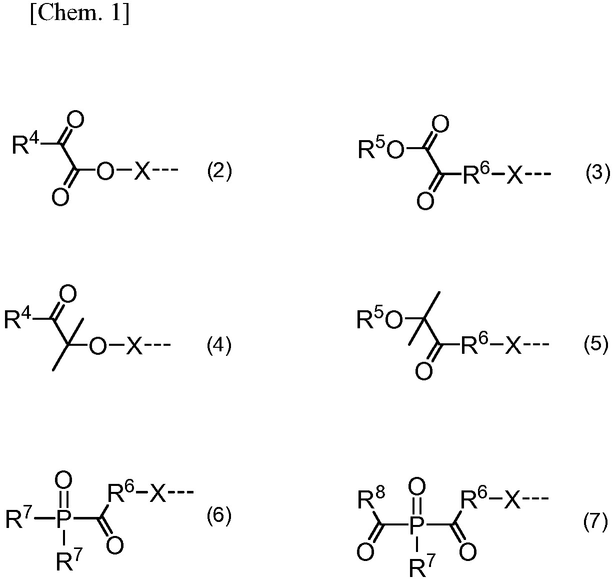 wherein R⁴ is an optionally substituted C₆-C₂₀ aryl group, R⁵ is hydrogen or an optionally substituted C₁-C₂₀ alkyl or C₆-C₂₀ aryl group, R⁶ is an optionally substituted C₆-C₂₀ arylene group, R⁷ is halogen or an optionally substituted C₁-C₂₀ alkyl, C₂-C₂₀ alkenyl or C₆-C₂₀ aryl group, R⁸ is an optionally substituted C₆-C₂₀ aryl group or a group: -R⁶-SiR²₍₃₋ₙ₎R³ₙ wherein R² is each independently hydrogen or an optionally substituted C₁-C₂₀ alkyl, C₂-C₂₀ alkenyl or C₆-C₂₀ aryl group, R³ is each independently hydroxy, a C₁-C₆ alkoxy group or halogen, R⁶ is as defined above, n is an integer of 1 to 3, X is a single bond or an optionally substituted C₁-C₂₀ alkylene group which may contain an ether, ester, amide, urethane, urea, sulfide or sulfoxide structure in the chain, and the broken line designates a point of attachment to a silicon atom.
3. The photoreactive organopolysiloxane of 1 or 2, containing 15 to 80% by weight of the photopolymerization incipient site-bearing group.
4. The photoreactive organopolysiloxane of 1 wherein a is a number of 0.3 to 0.7, b is a number of 0 to 0.2, c is a number of 0 to 0.2, and d is a number of 0.3 to 0.7.
5. The photoreactive organopolysiloxane of 1 wherein b and c are 0.
6. A method of preparing a photoreactive organopolysiloxane comprising the step of reacting an organohydrogenpolysiloxane having a constituent unit ratio represented by the formula (8) with at least one compound selected from incipient photopolymerization site-bearing compounds represented by the formulae (9) to (14), wherein the amount of the incipient photopolymerization site-bearing compounds represented by the formulae (9) to (14) is 1 to 90% by weight based on the total of the organohydrogenpolysiloxane having a constituent unit ratio represented by formula (8) and the incipient photopolymerization site-bearing compounds represented by formulae (9) to (14),

   (R⁹₃SiO_{1/2})ₐ(R⁹₂SiO_{2/2})_{b}(R⁹SiO_{3/2})_{c}(SiO_{4/2})_{d} (8)

   wherein R⁹ is each independently an optionally substituted C₁-C₂₀ alkyl or C₆-C₂₀ aryl group or hydrogen, a is a number of 0.1 to 0.8, b is a number of 0 to 0.5, c is a number of 0 to 0.5, and d is a number of 0.2 to 0.9, meeting a+b+c+d=1, 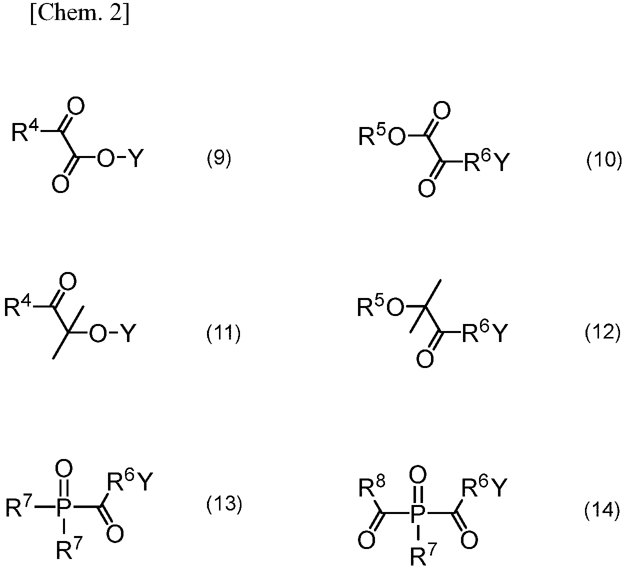 wherein R⁴ is an optionally substituted C₆-C₂₀ aryl group, R⁵ is hydrogen or an optionally substituted C₁-C₂₀ alkyl or C₆-C₂₀ aryl group, R⁶ is an optionally substituted C₆-C₂₀ arylene group, R⁷ is halogen or an optionally substituted C₁-C₂₀ alkyl, C₂-C₂₀ alkenyl or C₆-C₂₀ aryl group, R⁸ is an optionally substituted C₆-C₂₀ aryl group or a group: -R⁶-SiR²₍₃₋ₙ₎R³ₙ wherein R² is each independently hydrogen or an optionally substituted C₁-C₂₀ alkyl, C₂-C₂₀ alkenyl or C₆-C₂₀ aryl group, R³ is each independently hydroxy, a C₁-C₆ alkoxy group or halogen, R⁶ is as defined above, n is an integer of 1 to 3, and Y is an optionally substituted C₂-C₂₀ alkenyl or C₁-C₂₀ hydroxyalkyl group which may contain an ether, ester, amide, urethane, urea, sulfide or sulfoxide structure in the chain.
7. The method of preparing a photoreactive organopolysiloxane of 6 wherein the amount of the incipient photopolymerization site-bearing compounds represented by the formulae (9) to (14) is 15 to 80% by weight based on the total of the organohydrogenpolysiloxane having a constituent unit ratio represented by formula (8) and the incipient photopolymerization site-bearing compounds represented by formulae (9) to (14).
8. The method of preparing a photoreactive organopolysiloxane of 6 wherein a is a number of 0.3 to 0.7, b is a number of 0 to 0.2, c is a number of 0 to 0.2, and d is a number of 0.3 to 0.7.
9. The method of preparing a photoreactive organopolysiloxane of 6 wherein b and c are 0.
10. The method of preparing a photoreactive organopolysiloxane of 6, comprising the step of effecting hydrosilation reaction of an organohydrogenpolysiloxane having a constituent unit ratio represented by formula (8) with at least one compound selected from incipient photopolymerization site-bearing compounds represented by formulae (9) to (14), wherein
   Y is an optionally substituted C₂-C₂₀ alkenyl group which may contain an ether, ester, amide, urethane, urea, sulfide or sulfoxide structure in the chain.
11. The method of preparing a photoreactive organopolysiloxane of 6, comprising the step of effecting dehydrogenating condensation reaction of an organohydrogenpolysiloxane having a constituent unit ratio represented by the formula (8) with at least one compound selected from incipient photopolymerization site-bearing compounds represented by the formulae (9) to (14), wherein
   Y is an optionally substituted C₁-C₂₀ hydroxyalkyl group which may contain an ether, ester, amide, urethane, urea, sulfide or sulfoxide structure in the chain.
12. The method of preparing a photoreactive organopolysiloxane of 6, comprising the step of effecting hydrosilation reaction of a compound having an aliphatic unsaturated bond, but not an incipient photopolymerization site with an organohydrogenpolysiloxane having a constituent unit ratio represented by formula (8), or the reaction product of an organohydrogenpolysiloxane having a constituent unit ratio represented by formula (8) with at least one compound selected from incipient photopolymerization site-bearing compounds represented by formulae (9) to (14).
13. The method of preparing a photoreactive organopolysiloxane of 6, comprising the step of effecting dehydrogenating condensation reaction of a compound having a hydroxy group, but not an incipient photopolymerization site with an organohydrogenpolysiloxane having a constituent unit ratio represented by formula (8), or the reaction product of an organohydrogenpolysiloxane having a constituent unit ratio represented by formula (8) with at least one compound selected from incipient photopolymerization site-bearing compounds represented by formulae (9) to (14).
14. A photocurable composition comprising the photoreactive organopolysiloxane of 1 and a compound having a radical polymerizable unsaturated bond.
15. A cured product obtained by curing the photocurable composition of 14.

### ADVANTAGEOUS EFFECTS OF INVENTION

The photoreactive organopolysiloxane in which an incipient photopolymerization site is incorporated into the polysiloxane skeleton via a chemical bond, when used in a photocurable composition, is effective for preventing the photopolymerization initiator from bleeding out and for preventing the coating from losing transparency and yellowing.

Also, the photoreactive organopolysiloxane is fully compatible with polymerizable organic compounds such as acrylate compounds. Thus, the amount of the organopolysiloxane added to a curable composition can be increased.

Additionally, a polymerizable monomer initiates polymerization from the incipient photopolymerization site bonded to the polysiloxane skeleton as the starting point. The polysiloxane is incorporated as a crosslinking point into the coating, which avoids a lowering of coating hardness by the photopolymerization initiator and imparts effective photocure in air.

When the photoreactive organopolysiloxane is added to a photocurable composition, the coating can be effectively cured in air. A cured product having excellent mar resistance, transparency and least yellowing is obtained.

### BRIEF DESCRIPTION OF DRAWINGS

[FIG. 1] FIG. 1 is a diagram showing the relationship of mar resistance vs the effective amount of photoinitiator in the cured films of Examples 2-1 to 2-3 and Comparative Examples 2-1 to 2-3.
[FIG. 2] FIG. 2 is a diagram showing the relationship of initial haze vs the effective amount of photoinitiator in the cured films of Examples 2-1 to 2-3 and Comparative Examples 2-1 to 2-3.
[FIG. 3] FIG. 3 is a diagram showing the relationship of yellowness index (YI) vs the effective amount of photoinitiator in the cured films of Examples 2-1 to 2-3 and Comparative Examples 2-1 to 2-3.

### DESCRIPTION OF EMBODIMENTS

Now the invention is described in detail.

### (1) Photoreactive organopolysiloxane

One embodiment of the invention is a photoreactive organopolysiloxane having a constituent unit ratio represented by the formula (1) and containing 1 to 90% by weight of a photopolymerization incipient site-bearing group. Herein, the siloxane unit (R₃SiO_{1/2}) is referred to as M unit, the siloxane unit (R₂SiO_{2/2}) is referred to as D unit, the siloxane unit (RSiO_{3/2}) is referred to as T unit, and the siloxane unit (SiO_{4/2}) is referred to as Q unit.

(R¹₃SiO_{1/2})ₐ(R¹₂SiO_{2/2})_{b}(R¹SiO_{3/2})_{c}(SiO_{4/2})_{d} (1)

In formula (1), R¹ represents an alkyl group of 1 to 20 carbon atoms, preferably 1 to 5 carbon atoms, which may be straight, branched or cyclic. Examples thereof include straight or branched alkyl groups such as methyl, ethyl, n-propyl, i-propyl, n-butyl, s-butyl, t-butyl, n-pentyl, n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and n-icosyl; and cycloalkyl groups such as cyclopropyl, cyclobutyl, cyclopentyl, cyclohexyl, cycloheptyl, and cyclooctyl. Of these, straight alkyl groups of 1 to 3 carbon atoms are preferred, with methyl being most preferred.

R¹ also represents an aryl group of 6 to 20 carbon atoms, preferably 6 to 12 carbon atoms, examples of which include phenyl, biphenyl and naphthyl, with phenyl being preferred.

It is noted that the alkyl and aryl groups may have a substituent. Exemplary substituents include alkoxy groups such as methoxy and ethoxy; halogen atoms such as fluorine, chlorine and bromine; hydroxy groups; cyano and isocyanate groups.

R¹ also represents a group bearing an incipient photopolymerization site (or photopolymerization initiating site). The incipient photopolymerization site is not particularly limited as long as it is structured to impart excitation energy to a compound containing a radical polymerizable group to initiate cure reaction. Examples of the incipient photopolymerization site include benzylketal, α-hydroxyalkylphenone, α-aminoalkylphenone, acylphosphineoxide, benzoylformic acid, benzoylformate, benzophenone, oxime ester, titanocene, o-benzoylbenzoic acid ester, benzoin, benzoin ether, xanthone, thioxanthone, disulfide, quinone, halogenated hydrocarbon, amine, and organic peroxide structures, and combinations thereof.

Herein, groups having the formulae (2) to (7) are preferred as the incipient photopolymerization site-bearing group.

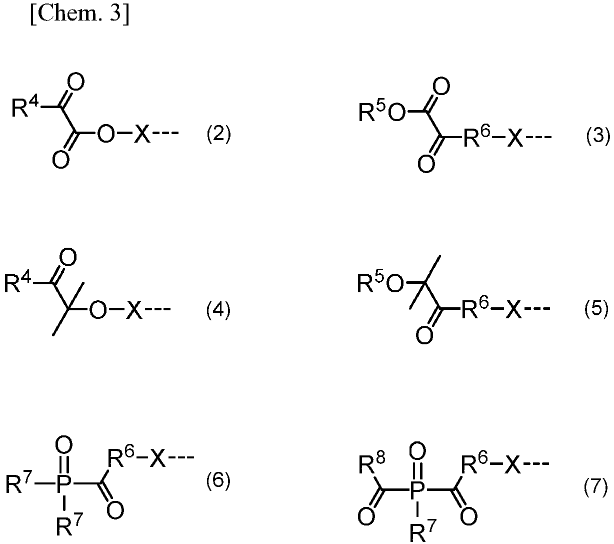

In the above formulae, R⁴ is an optionally substituted C₆-C₂₀ aryl group, R⁵ is hydrogen or an optionally substituted C₁-C₂₀ alkyl or C₆-C₂₀ aryl group, R⁶ is an optionally substituted C₆-C₂₀ arylene group, R⁷ is halogen or an optionally substituted C₁-C₂₀ alkyl, C₂-C₂₀ alkenyl or C₆-C₂₀ aryl group, R⁸ is an optionally substituted C₆-C₂₀ aryl group or a group: -R⁶-SiR²₍₃₋ₙ₎R³ₙ wherein R² is each independently hydrogen or an optionally substituted C₁-C₂₀ alkyl, C₂-C₂₀ alkenyl or C₆-C₂₀ aryl group, R³ is each independently hydroxy, a C₁-C₆ alkoxy group or halogen, R⁶ is as defined above, n is an integer of 1 to 3, and Y is an optionally substituted C₂-C₂₀ alkenyl or C₁-C₂₀ hydroxyalkyl group which may contain an ether, ester, amide, urethane, urea, sulfide or sulfoxide structure in the chain.

Examples of the optionally substituted aryl group of 6 to 20 carbon atoms, preferably 6 to 12 carbon atoms, represented by R⁴, include phenyl, 4-methoxyphenyl, 4-hydroxyphenyl, 4-(2-hydroxyethoxy)phenyl, biphenyl and naphthyl. From the aspects of storage stability and photopolymerization, phenyl and 4-(2-hydroxyethoxy)phenyl are preferred.

Examples of the optionally substituted alkyl group of 1 to 20 carbon atoms, preferably 1 to 5 carbon atoms, represented by R⁵, are as exemplified above for the alkyl group R¹. The substituents thereon are also as exemplified above.

Examples of the optionally substituted aryl group of 6 to 20 carbon atoms, preferably 6 to 12 carbon atoms, represented by R⁵, are as exemplified above for the aryl group R¹. The substituents thereon are also as exemplified above.

Of these, R⁵ is preferably hydrogen or phenyl.

Examples of the optionally substituted arylene group of 6 to 20 carbon atoms, preferably 6 to 12 carbon atoms, represented by R⁶, include phenylene, methylphenylene, dimethylphenylene, biphenylene, and naphthylene, with phenylene and dimethylphenylene being preferred.

Examples of the halogen represented by R⁷ include fluorine, chlorine, bromine and iodine.

Examples of the alkyl group of 1 to 20 carbon atoms, preferably 1 to 5 carbon atoms, represented by R⁷, include methyl, ethyl, n-propyl, isopropyl, n-butyl, isobutyl, sec-butyl, tert-butyl, n-pentyl, n-hexyl, cyclohexyl, n-heptyl, and n-octyl.

The alkenyl group of 2 to 20 carbon atoms, preferably 2 to 10 carbon atoms, represented by R⁷, may be straight, branched or cyclic and examples thereof include vinyl, allyl, butenyl, hexenyl and octenyl.

Examples of the aryl group of 6 to 20 carbon atoms, preferably 6 to 12 carbon atoms, represented by R⁷, include phenyl, biphenyl and naphthyl.

It is noted that the alkyl and alkenyl groups may have a substituent. Exemplary substituents include alkoxy groups such as methoxy and ethoxy; halogen atoms such as fluorine, chlorine and bromine; hydroxy groups; and cyano groups.

The aryl group may also have a substituent. Exemplary substituents include alkyl groups such as methyl and ethyl; alkoxy groups such as methoxy and ethoxy; halogen atoms such as fluorine, chlorine and bromine; hydroxy groups; and cyano groups.

Inter alia, R⁷ is preferably phenyl.

Examples of the optionally substituted C₆-C₂₀ aryl group represented by R⁸ are as exemplified above for the aryl group R⁴, with phenyl being preferred.

R⁸ is also a group: -R⁶-SiR²₍₃₋ₙ₎R³ₙ wherein R² is each independently hydrogen or an optionally substituted C₁-C₂₀ alkyl, C₂-C₂₀ alkenyl or C₆-C₂₀ aryl group, R³ is each independently hydroxy, a C₁-C₆ alkoxy group or halogen, R⁶ is as defined above, n is an integer of 1 to 3.

Examples of the C₁-C₂₀ alkyl, C₂-C₂₀ alkenyl or C₆-C₂₀ aryl group, represented by R², are as exemplified above for the alkyl, alkenyl and aryl groups R⁷. Inter alia, C₁-C₃ alkyl groups with less steric hindrance are preferred, with methyl being most preferred.

Examples of the halogen R³ are as exemplified above for R⁷.

Examples of the C₁-C₆ alkoxy group, represented by R³, whose alkyl moiety may be straight, branched or cyclic, include methoxy, ethoxy, and n-propoxy.

Of these, R³ is preferably methoxy in view of stability and reactivity.

The subscript n is an integer of 1 to 3. In view of reactivity, n is preferably 2 or 3, most preferably 3.

X is a single bond or an optionally substituted C₁-C₂₀ alkylene group which may contain an ether bond, ester, amide, urethane, urea, sulfide or sulfoxide structure in the chain.

The C₁-C₂₀ alkylene group may be straight, branched or cyclic and examples thereof include methylene, ethylene, trimethylene, propylene, tetramethylene, pentamethylene, hexamethylene, heptamethylene, octamethylene, nonamethylene, and cyclohexylene.

For the alkylene group, when its carbon count is greater (8 or more), the organopolysiloxane has better compatibility with organic materials; when its carbon count is smaller (3 or less), the organopolysiloxane is quite effective for achieving an improvement in mar resistance when incorporated in a cured film.

Notably, the alkylene group may have a substituent. Exemplary substituents include alkoxy groups such as methoxy and ethoxy; halogen atoms such as fluorine, chlorine and bromine; hydroxy groups; and cyano groups. Also, an ether, ester, amide, urethane, urea, sulfide or sulfoxide structure may intervene in a part of the alkylene group.

The photoreactive organopolysiloxane should contain 1 to 90% by weight, preferably 10 to 85% by weight, more preferably 15 to 80% by weight of the incipient photopolymerization site-bearing group. A content of the incipient photopolymerization site-bearing group which is less than 1% by weight may result in short photocure. If the content exceeds 90% by weight, the resulting cured product may lose transparency or turn yellow.

The subscripts a, b, c and d meet a+b+c+d=1.

Herein, "a" indicative of the content ratio of M units is a number of 0.1 to 0.8, preferably 0.3 to 0.7, more preferably 0.5 to 0.7. If "a" is less than 0.1, then the photoreactive organopolysiloxane may lose storage stability and compatibility with polymerizable organic compounds such as acrylate compounds. If "a" exceeds 0.8, then the resulting cured product may have a low hardness.

Herein, "b" indicative of the content ratio of D units is a number of 0 to 0.5, preferably 0 to 0.2, more preferably 0. If "b" exceeds 0.5, then the resulting cured product may have a low hardness.

Herein, "c" indicative of the content ratio of T units is a number of 0 to 0.5, preferably 0 to 0.2, more preferably 0. If "c" exceeds 0.5, then the photoreactive organopolysiloxane may lose compatibility with polymerizable organic compounds such as acrylate compounds.

Herein, "d" indicative of the content ratio of Q units is a number of 0.2 to 0.9, preferably 0.3 to 0.7, more preferably 0.3 to 0.5. If "d" is less than 0.2, then the resulting cured product may have a low hardness. If "d" exceeds 0.9, then the photoreactive organopolysiloxane may lose storage stability and compatibility with polymerizable organic compounds such as acrylate compounds.

It is noted that the ratio of constituent units in the photoreactive organopolysiloxane can be ascertained by any well-known methods, for example, ²⁹Si-NMR spectroscopy.

The photoreactive organopolysiloxane should preferably have a number average molecular weight (Mn) of 1,000 to 30,000, more preferably 2,000 to 20,000, even more preferably 3,000 to 15,000 though Mn is not limited thereto. A Mn of up to 20,000 restrains the organopolysiloxane from any viscosity buildup and ensures efficient working and satisfactory storage stability. A Mn of at least 1,000 leads to better curability and higher hardness of the cured product.

As used herein, Mn is determined by gel permeation chromatography (GPC) versus polystyrene standards (the same holds true, hereinafter).

### (2) Method of preparing photoreactive organopolysiloxane

Next, one exemplary method of preparing the inventive photoreactive organopolysiloxane is described in detail.

The inventive photoreactive organopolysiloxane may be obtained by a method comprising the step of introducing at least one compound selected from incipient photopolymerization site-bearing compounds represented by the formulae (9) to (14) into an organohydrogenpolysiloxane having a constituent unit ratio represented by the formula (8) via hydrosilation or dehydrogenation reaction.

(R⁹₃SiO_{1/2})ₐ(R⁹₂SiO_{2/2})_{b}(R⁹SiO_{3/2})_{c}(SiO_{4/2})_{d} (8)

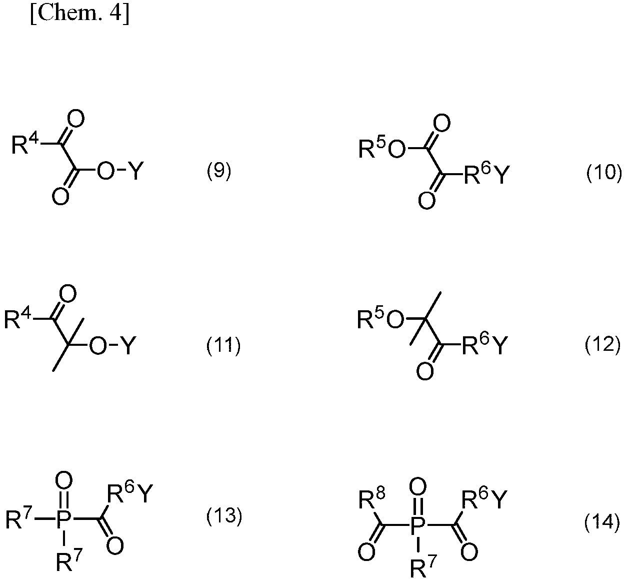

Herein R⁴, R⁵, R⁶, R⁷ and R⁸ are as defined in the above formulae (2) to (7), Y is an optionally substituted C₂-C₂₀ alkenyl or C₁-C₂₀ hydroxyalkyl group which may contain an ether, ester, amide, urethane, urea, sulfide or sulfoxide structure in the chain.

In formula (8), R⁹ is each independently an optionally substituted C₁-C₂₀ alkyl or C₆-C₂₀ aryl group or hydrogen, at least one R⁹ per molecule is hydrogen, a is a number of 0.1 to 0.8, b is a number of 0 to 0.5, c is a number of 0 to 0.5, and d is a number of 0.2 to 0.9, meeting a+b+c+d=1.

The alkyl group of 1 to 20 carbon atoms, preferably 1 to 5 carbon atoms, represented by R⁹, may be straight, branched or cyclic. Examples thereof include straight or branched alkyl groups such as methyl, ethyl, n-propyl, i-propyl, n-butyl, s-butyl, t-butyl, n-pentyl, n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and n-icosyl; and cycloalkyl groups such as cyclopropyl, cyclobutyl, cyclopentyl, cyclohexyl, cycloheptyl, and cyclooctyl. Of these, methyl is most preferred.

Examples of the aryl group of 6 to 20 carbon atoms, preferably 6 to 12 carbon atoms include phenyl, biphenyl and naphthyl, with phenyl being preferred.

It is noted that the alkyl and aryl groups may have a substituent. Exemplary substituents include alkoxy groups such as methoxy and ethoxy; halogen atoms such as fluorine, chlorine and bromine; hydroxy groups; cyano and isocyanate groups.

The silicon-bonded hydrogen (i.e., Si-H group) in the organohydrogenpolysiloxane becomes a reactive site when a functional group having an incipient photopolymerization site is introduced via hydrosilation or dehydrogenating condensation reaction.

The number of hydrogen atoms relative to the total number of R⁹ per molecule of the organohydrogenpolysiloxane is such that the amount of incipient photopolymerization site-bearing compounds represented by the formulae (9) to (14), subject to the hydrosilation or dehydrogenating condensation reaction, may be 1 to 90% by weight, preferably 10 to 85% by weight, more preferably 15 to 80% by weight based on the total of an organohydrogenpolysiloxane having a constituent unit ratio represented by the formula (8) and incipient photopolymerization site-bearing compounds represented by the formulae (9) to (14).

The subscripts a, b, c and d are numbers meeting a+b+c+d=1.

Herein, "a" indicative of the content ratio of M units is a number of 0.1 to 0.8, preferably 0.3 to 0.7, more preferably 0.5 to 0.7. If "a" is less than 0.1, then the photoreactive organopolysiloxane may lose storage stability and compatibility with polymerizable organic compounds such as acrylate compounds. If "a" exceeds 0.8, then the cured product obtained using the photoreactive organopolysiloxane may have a low hardness.

Herein, "b" indicative of the content ratio of D units is a number of 0 to 0.5, preferably 0 to 0.2, more preferably 0. If "b" exceeds 0.5, then the cured product obtained using the photoreactive organopolysiloxane may have a low hardness.

Herein, "c" indicative of the content ratio of T units is a number of 0 to 0.5, preferably 0 to 0.2, more preferably 0. If "c" exceeds 0.5, then the photoreactive organopolysiloxane may lose compatibility with polymerizable organic compounds such as acrylate compounds.

Herein, "d" indicative of the content ratio of Q units is a number of 0.2 to 0.9, preferably 0.3 to 0.7, more preferably 0.3 to 0.5. If "d" is less than 0.2, then the resulting cured product may have a low hardness. If "d" exceeds 0.9, then the photoreactive organopolysiloxane may lose storage stability and compatibility with polymerizable organic compounds such as acrylate compounds.

The organohydrogenpolysiloxane should preferably have a number average molecular weight (Mn) of 500 to 10,000, more preferably 800 to 7,000, even more preferably 1,000 to 5,000 though Mn is not limited thereto. A Mn of up to 10,000 restrains the organohydrogenpolysiloxane from any viscosity buildup and ensures efficient working and satisfactory storage stability. A Mn of at least 500 leads to better curability of the photoreactive organopolysiloxane and higher hardness of the cured product.

The organohydrogenpolysiloxane used as a reactant in the method of preparing the photoreactive organopolysiloxane may be prepared, for example, by the well-known method described in JP-A 2017-75283.

In formulae (9) to (14), Y is an optionally substituted C₂-C₂₀ alkenyl or C₁-C₂₀ hydroxyalkyl group which may contain an ether, ester, amide, urethane, urea, sulfide or sulfoxide structure in the chain, which undergoes hydrosilation reaction (when Y is an alkenyl group) or dehydrogenating condensation reaction (when Y is a hydroxyalkyl group) with a Si-H group in the organohydrogenpolysiloxane.

Examples of the alkenyl group of 2 to 20 carbon atoms, preferably 2 to 10 carbon atoms include vinyl, allyl, 3-butenyl, 5-hexenyl, 7-octenyl, 9-decenyl and 11-dodecenyl.

Examples of the hydroxyalkyl group of 1 to 20 carbon atoms, preferably 1 to 10 carbon atoms include hydroxymethyl, 2-hydroxyethyl, 3-hydroxypropyl, 4-hydroxybutyl, 5-hydroxypentyl, 6-hydroxyhexyl, and 8-hydroxyoctyl.

For the alkenyl or hydroxyalkyl group, when its carbon count is greater (8 or more), the organopolysiloxane has better compatibility with organic materials; when its carbon count is smaller (3 or less), the organopolysiloxane is quite effective for achieving an improvement in mar resistance when incorporated in a cured film.

It is noted that the alkenyl or hydroxyalkyl group may have a substituent other than unsaturated bond or hydroxy in its structure. Exemplary substituents include alkoxy groups such as methoxy and ethoxy; halogen atoms such as fluorine, chlorine and bromine; hydroxy groups; and cyano groups. Also, an ether, ester, amide, urethane, urea, sulfide or sulfoxide structure may intervene in a part of the alkenyl or hydroxyalkyl structure.

In the hydrosilation reaction in the method of preparing the photoreactive organopolysiloxane, a catalyst is preferably added in order to promote the reaction of an alkenyl group in the incipient photopolymerization site-bearing compound represented by any one of formulae (9) to (14) with a Si-H group in the organohydrogenpolysiloxane represented by formula (8).

Examples of the hydrosilation reaction catalyst include platinum black, chloroplatinic acid, alcohol modified chloroplatinic acids, complexes of chloroplatinic acid with olefins, vinylsiloxanes, and acetylene alcohols. The amount of the catalyst added may be selected as appropriate depending on the desired cure rate and is typically to provide 0.1 to 500 ppm, preferably 1 to 200 ppm, calculated as the weight of platinum group metal, based on the weight of the incipient photopolymerization site-bearing compound subject to the reaction.

Although conditions for the hydrosilation reaction are not particularly limited, a reaction temperature of 20 to 120°C and a reaction time of 1 to 8 hours are preferred, with a reaction temperature of 20 to 100°C and a reaction time of 1 to 6 hours being more preferred.

In the dehydrogenating condensation reaction in the method of preparing the photoreactive organopolysiloxane, a catalyst is preferably added in order to promote the reaction of a hydroxy group in the incipient photopolymerization site-bearing compound represented by any one of formulae (9) to (14) with a Si-H group in the organohydrogenpolysiloxane represented by formula (8).

Examples of the dehydrogenating condensation reaction catalyst include metal compounds such as palladium complexes, platinum complexes, and palladium on carbon, basic compounds such as diethylhydroxyamine, and Lewis acid compounds such as tris(pentafluorophenyl)boran. The amount of the catalyst added may be selected as appropriate depending on the desired cure rate and is typically 0.05 to 2.0 mol%, preferably 0.1 to 1.0 mol% based on the weight of the incipient photopolymerization site-bearing compound subject to the reaction.

The catalyst used in the dehydrogenating condensation reaction may be removed at the end of reaction by any well-known means using adsorbents or the like. For example, basic compounds such as diethylhydroxyamine may be removed by adsorption using anion exchange resins such as Kyoward 700 (Kyowa Chemical Corp.). Solid catalysts such as palladium on carbon may be removed by filtration.

Although conditions for the dehydrogenating condensation reaction are not particularly limited, a reaction temperature of 20 to 150°C and a reaction time of 1 to 8 hours are preferred, with a reaction temperature of 20 to 120°C and a reaction time of 1 to 6 hours being more preferred.

The amount of the incipient photopolymerization site-bearing compound represented by any one of formulae (9) to (14) subject to hydrosilation reaction or dehydrogenating condensation reaction is 1 to 90% by weight, preferably 10 to 85% by weight, more preferably 15 to 80% by weight based on the total weight of the organohydrogenpolysiloxane having a constituent unit ratio represented by formula (8) and the incipient photopolymerization site-bearing compound represented by any one of formulae (9) to (14). If the amount of the incipient photopolymerization site-bearing compound is less than 1% by weight, the resulting photoreactive organopolysiloxane may be short in photocure. If the amount exceeds 90% by weight, the resulting cured product may lose transparency or turn yellow.

The method may involve the step of effecting reaction of a compound having an aliphatic unsaturated bond or hydroxy group, but not an incipient photopolymerization site with an organohydrogenpolysiloxane having a constituent unit ratio represented by formula (8), or the reaction product of an organohydrogenpolysiloxane having a constituent unit ratio represented by formula (8) with an incipient photopolymerization site-bearing compound represented by any one of formulae (9) to (14). The reaction is hydrosilation reaction when the compound has an aliphatic unsaturated bond or dehydrogenating condensation reaction when the compound has a hydroxy group.

Examples of the compound having an aliphatic unsaturated bond or hydroxy group, but not an incipient photopolymerization site include compounds having an aliphatic unsaturated bond such as pentene, hexene, heptane, octene, nonene, decene, dodecene, styrene, and allylbenzene; and compounds having a hydroxy group such as methanol, ethanol, propanol, butanol, pentanol, hexanol, heptanol, octanol, ethylene glycol monomethyl ether, propylene glycol monomethyl ether, ethylene glycol monoethyl ether, propylene glycol monoethyl ether, diethylene glycol monomethyl ether, dipropylene glycol monomethyl ether, diethylene glycol monoethyl ether, dipropylene glycol monoethyl ether, and benzyl alcohol.

Any of these compounds is reacted with an organohydrogenpolysiloxane having a constituent unit ratio represented by formula (8), or the reaction product of an organohydrogenpolysiloxane having a constituent unit ratio represented by formula (8) with an incipient photopolymerization site-bearing compound represented by any one of formulae (9) to (14), to introduce an alkyl or oxyalkyl group for thereby tailoring the storage stability, viscosity or compatibility with acrylate compounds of the photoreactive organopolysiloxane.

In the method of preparing the photoreactive organopolysiloxane, an organic solvent may be used.

Of the organic solvents, aprotic organic solvents are preferred for inhibiting side reactions or preventing catalysts from deactivation. Examples include ethers such as dioxane and tetrahydrofuran; and aromatic hydrocarbons such as toluene, o-xylene, m-xylene, and p-xylene. The solvents may be used alone or in admixture of two or more.

### (3) Photocurable composition

The photoreactive organopolysiloxane defined herein may be used as a photocurable composition by mixing it with a compound having a radical polymerizable unsaturated bond.

The compound having a radical polymerizable unsaturated bond is not particularly limited as long it is a monomer or oligomer having at least one radical polymerizable unsaturated bond.

Examples include (meth)acrylate compounds, styrene compounds, maleimide compounds, fumarate compounds, and mixtures of thiol compounds with unsaturated bond-bearing compounds, which may be used alone or in admixture.

The (meth)acrylate compounds may be either mono- or polyfunctional. As used herein, "(meth)acrylate" refers to acrylate or methacrylate.

Examples of the monofunctional (meth)acrylate compound include ethyl acrylate, butyl acrylate, ethyl hexyl acrylate, 2-hydroxyethyl acrylate, isobomyl acrylate and tetrahydrofurfuryl acrylate.

Examples of the polyfunctional (meth)acrylate compound include 1,4-butanediol diacrylate, 1,6-hexanediol diacrylate (HDDA), tetraethylene glycol diacrylate, neopentyl glycol diacrylate, ethylene glycol diacrylate, polyethylene glycol (n=2 to 15) diacrylate, polypropylene glycol (n=2 to 15) diacrylate, polybutylene glycol (n=2 to 15) diacrylate, 2,2-bis(4-acryloxyethoxyphenyl)propane, 2,2-bis(4-acryloxydiethoxyphenyl)propane, trimethylolpropane diacrylate, bis(2-acryloxyethyl)hydroxyethyl isocyanurate, trimethylolpropane triacrylate (TMPTA), tris(2-acryloxyethyl) isocyanurate, pentaerythritol triacrylate, pentaerythritol tetraacrylate, dipentaerythritol tetraacrylate, dipentaerythritol pentaacrylate, dipentaerythritol hexaacrylate (DPHA), caprolactone-modified dipentaerythritol hexaacrylate (acrylate of the addition product of dipentaerythritol with ε-caprolactone), caprolactone-modified dipentaerythritol hydroxypentaacrylate, ditrimethylolpropane tetraacrylate, N-vinylpyrrolidone, aliphatic urethane acrylate oligomers, and aliphatic polyester acrylate oligomers.

In the photocurable composition of the invention, photoinitiators other than the photoreactive organopolysiloxane, polymerization inhibitors, antioxidants, UV absorbers, photostabilizers, and solvents may be formulated, if necessary, as long as the benefits of the invention are not impaired.

The photoinitiator other than the photoreactive organopolysiloxane is a compound which is excited upon receipt of light and gives excitation energy to the radical polymerizable group-containing compound to initiate UV-irradiation curing reaction.

In the photocurable composition wherein the photoreactive organopolysiloxane is already provided with the function of photoinitiator, the other photoinitiator need not necessarily be added. Such properties as surface cure, deep-section cure, and visible light cure can be controlled by adding the other photoinitiator if necessary.

Examples of the photoinitiator other than the photoreactive organopolysiloxane include acetophenone and derivatives thereof, benzophenone and derivatives thereof, o-benzoylbenzoates, benzoin and derivatives thereof, benzoin ethers and derivatives thereof, xanthone and derivatives thereof, disulfide compounds, quinone compounds, halogenated hydrocarbons, amines, and organic peroxides. Inter alia, acetophenone and derivatives thereof, benzophenone and derivatives thereof, o-benzoylbenzoates, benzoin and derivatives thereof, benzoin ethers and derivatives thereof, xanthone and derivatives thereof, substituted or unsubstituted benzoyl group-containing compounds, and organic peroxides are preferred from the aspects of compatibility and stability.

Examples of the photoinitiator include acetophenone, propiophenone, 2-hydroxy-2-methylpropiophenone, 2,2-dimethoxy-1,2-diphenylethan-1-one, 2-hydroxy-2-methyl-1-phenylpropan-1-one, 1-hydroxycyclohexyl phenyl ketone, 1- [4-(2-hydroxyethoxy)phenyl]-2-hydroxy-2-methyl-1-propan-1-one, 2-hydroxy-1-{4-[4-(2-hydroxy-2-methylpropionyl)benzyl]phenyl}-2-methylpropan-1-one, 2-methyl-1-(4-methylthiophenyl)-2-morpholinopropan-1-one, 2-benzyl-2-dimethylamino(4-morpholinophenyl)butanone-1, 2-(dimethylamino)-2-[(4-methylphenyl)methyl]-1-[4-(4-morpholinyl)phenyl]-1-butanone, 2,4,6-trimethylbenzoyl diphenylphosphine oxide, bis(2,4,6-trimethylbenzoyl)phenylphosphine oxide, 1-[4-(phenylthio)phenyl-1,2-octanedione 2-(O-benzoyloxime), 1-[9-ethyl-6-(2-methylbenzoyl)-9H-carbazol-3-yl]ethanone 1-(O-actyloxime), oxyphenyl acetate, mixtures of 2-[2-oxo-2-phenylacetoxyethoxy]ethyl ester, oxyphenyl acetate, and 2-(2-hydroxyethoxy)ethyl esters, phenyl glyoxylic acid methyl ester, ethyl-4-dimethylaminobenzoate, 2-ethylhexyl-4-dimethylaminobenzoate, bis(2,6-dimethoxybenzoyl)-2,4,4-trimethylpentylphosphine oxide, benzoyl peroxide, and cumene peroxide, which may be used alone or in admixture.

Of the foregoing photoinitiators, preferred from the aspects of compatibility and photoreaction are acetophenone, propiophenone, 2-hydroxy-2-methylpropiophenone, 2,2-dimethoxy-1,2-diphenylethan-1 -one, 2-hydroxy-2-methyl-1-phenylpropan-1-one, 1-hydroxycyclohexyl phenyl ketone, 1- [4-(2-hydroxyethoxy)phenyl]-2-hydroxy-2-methyl-1-propan-1-one, 2-hydroxy-1-{4-[4-(2-hydroxy-2-methylpropionyl)benzyl]phenyl}-2-methylpropan-1-one, 2-methyl-1-(4-methylthiophenyl)-2-morpholinopropan-1-one, 2-benzyl-2-dimethylamino(4-morpholinophenyl)-butanone-1, 2-(dimethylamino)-2-[(4-methylphenyl)methyl]-1-[4-(4-morpholinyl)phenyl]-1-butanone, 2,4,6-trimethylbenzoyl diphenylphosphine oxide, bis(2,4,6-trimethylbenzoyl)phenylphosphine oxide, 1-[4-(phenylthio)phenyl-1,2-octanedione 2-(O-benzoyloxime)], 1-[9-ethyl-6-(2-methylbenzoyl)-9H-carbazol-3-yl]ethanone 1-(O-actyloxime), oxyphenyl acetate, and mixtures of 2-[2-oxo-2-phenylacetoxyethoxy]ethyl ester, oxyphenyl acetate, and 2-(2-hydroxyethoxy)ethyl esters.

When used, the amount of the photoinitiator blended is preferably 0.1 to 10 parts by weight per 100 parts by weight of solids in the photocurable composition.

Examples of the polymerization inhibitor include hydroquinone, p-methoxyphenol, t-butyl catechol, phenothiazine, benzofuroxan, nitrosobenzene, 2-methyl-2-nitropropane dimer, and N-t-butyl-α-phenylnitrone.

When used, the amount of the polymerization inhibitor added is about 100 to 10,000 ppm based on the weight of the (meth)acryloyl-containing organosilicon compound in the composition.

The antioxidant may be used for preventing the cured composition from oxidation for thereby improving its weather resistance. Hindered amine and hindered phenol-based antioxidants are exemplary.

Examples of the hindered amine-based antioxidants include N,N',N",N"'-tetrakis(4,6-bis(butyl(N-methyl-2,2,6,6-tetramethylpiperidin-4-yl)amino)triazin-2-yl)-4,7-diazadecane-1,10-diamine, dibutylamine/1,3,5-triazine/N,N'-bis(2,2,6,6-tetramethyl-4-piperidyl-1,6-hexamethylenediamine)/N-(2,2,6,6-tetramethyll-4-piperidyl)butylamine polycondensate, poly[{6-(1,1,3,3-tetramethylbutyl)amino-1,3,5-triazine-2,4-diyl} {(2,2,6,6-tetramethyl-4-piperidyl)imino}hexamethylene{(2,2,6,6-tetramethyl-4-piperidyl)imino}hexamethylene {(2,2,6,6-tetramethyl-4-piperidyl)imino}], polymers of dimethyl succinate and 4-hydroxy-2,2,6,6-tetramethyl-1-piperidine ethanol, [the reaction product of decanedioic acid bis(2,2,6,6-tetramethyl-1-(octyloxy)-4-piperidyl) ester, 1,1-dimethylethylhydroperoxide and octane (70 wt%)]-polypropylene (30 wt%), bis(1,2,2,6,6-pentamethyl-4-piperidyl) [(3,5-bis(1,1-dimethylethyl)-4-hydroxyphenyl)-methyl]butyl malonate, methyl 1,2,2,6,6-pentamethyl-4-piperidyl sebacate, bis(2,2,6,6-tetramethyl) sebacate, bis(1,2,2,6,6-pentamethyl-4-piperidyl) sebacate, 1-[2-[3-(3,5-di-tert-butyl-4-hydroxyphenyl)propionyloxy] ethyl] -4- [3 -(3,5 -di-tert-butyl-4-hydroxyphenyl)-propionyloxy]-2,2,6,6-tetramethylpiperidine, 4-benzoyloxy-2,2,6,6-tetramethylpiperidine, and 8-acetyl-3-dodecyl-7,7,9,9-tetramethyl-1,3,8-triazaspiro[4.5]decane-2,4-dione.

Examples of the hindered phenol-based antioxidant include pentaerythritol tetrakis [3 -(3,5 -di-tert-butyl-4-hydroxyphenyl)propionate], thiodiethylene bis[3 -(3,5 -di-tert-butyl-4-hydroxyphenyl)propionate], octadecyl-3 -(3,5 -di-tert-butyl-4-hydroxyphenyl) propionate, N,N'-hexane-1,6-diyl bis[3-(3,5-di-tert-butyl-4-hydroxyphenylpropionamide)], benzene propanoate 3,5-bis(1,1-dimethylethyl)-4-hydroxy-C7-C9 branched alkyl ester, 2,4-dimethyl-6-(1-methylpentadecyl)phenol, diethyl [[3,5-bis(1,1-dimethylethyl)-4-hydroxyphenyl]methyl] phosphonate, 3,3',3",5,5',5"-hexane-tert-butyl-4-a,a',a"-(mesitylene-2,4,6-tolyl)tri-p-cresol, calcium diethylbis[[[3,5-bis(1,1-dimethylethyl)-4-hydroxyphenyl]methyl]phosphonate], 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6-(1H,3H,SH)trione, the reaction product of N-phenylbenzene amine with 2,4,4-trimethylpentene, and 2,6-di-tert-butyl-4-(4,6-bis(octylthio)-1,3,5-triazin-2-ylamino)phenol.

The antioxidant may be used alone or in admixture.

The UV absorber is a light-resistant stabilizer and used to prevent photo-degradation and to improve weather resistance. For example, benzotriazole, triazine, benzophenone, and benzoate based compounds are suitable.

Examples of the UV absorber include benzotriazole based UV absorbers such as 2,4-di-tert-butyl-6-(5-chlorobenzotriazol-2-yl)phenol, 2-(2H-benzotriazol-2-yl)-4,6-di-tert-pentylphenol, 2-(2H-benzotriazol-2-yl)-4-(1,1,3,3-tetramethylbutyl)phenol, the reaction product of methyl 3-(3-(2H-benzotriazol-2-yl)-5-tert-butyl-4-hydroxyphenyl)propionate/polyethylene glycol 300, and 2-(2H-benzotriazol-2-yl)-6-(straight or branched dodecyl)-4-methylphenol; triazine based UV absorbers such as 2-(4,6-diphenyl-1,3,5-triazin-2-yl)-5-(hexyloxy)phenol; benzophenone based UV absorbers such as octabenzone; benzoate UV absorbers such as 2,4-di-tert-butylphenyl-3,5-di-tert-butyl-4-hydroxybenzoate; and organic compounds obtained by modifying the foregoing compounds with silyl and/or acryloyl groups.

The UV absorber may be used alone or in admixture.

The photostabilizer is used to prevent the cured product from photo-oxidative degradation. Exemplary stabilizers include benzotriazole, hindered amine, and benzoate compounds, with the hindered amine compounds being preferred. From the standpoint of improving the storage stability of the composition, tertiary amine-containing hindered amine based photo stabilizers are more preferred.

Examples of the tertiary amine-containing hindered amine based photostabilizer include Tinuvin 622LD, Tinuvin 144, Tinuvin 123, and CHIMASSORB 119FL (BASF), MARK LA-57, LA-62, LA-67, and LA-63 (Adeka Co., Ltd.); Sanol LS-765, LS-292, LS-2626, LS-1114, and LS-744 (Sankyo Co., Ltd.), which may be used alone or in admixture.

The solvent is not particularly limited as long as the foregoing components can be dissolved or dispersed therein. Solvents based on a polar organic solvent are preferred.

Examples of the organic solvent include alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate and cyclohexyl acetate, which may be used alone or in admixture.

The amount of the solvent used is preferably such that the photocurable composition may have a solid concentration of 1 to 80% by weight, more preferably 10 to 60% by weight. Outside the range, a film obtained by coating and curing the composition may be defective. Specifically, at a concentration below the range, the film is likely to sag, wrinkle or mottle, failing to achieve the desired hardness and mar resistance. At a concentration beyond the range, the film is likely to undergo blushing, whitening and cracking.

Besides the foregoing additives, other additives such as silicone resins, leveling agents, thickeners, pigments, dyes, metal powders, heat ray reflecting/absorbing agents, plasticizers, antistatic agents, antifouling agents, and water repellents may be added to the photocurable composition as long as the objects and benefits of the invention are not adversely affected.

For example, KP-341 (Shin-Etsu Chemical Co., Ltd.), BYK-180 and BYK-190 (BYK Chemie Gmbh), and LE-604 (Kyoei Co., Ltd.) may be used as the leveling agent.

### (4) Cured product

The photocurable composition of the invention can be cured by irradiating UV radiation in an atmosphere such as air or nitrogen.

Examples of the lamp emitting light in a wavelength region capable of reaction include high-pressure mercury lamps (UV-7000) and metal halide lamps (MHL-250, MHL-450, MHL-150, MHL-70) from Ushio Electric Co., Ltd., metal halide lamps (JM-MTL2KW) from JM Tech., UV lamp (OSBL360) from Mitsubishi Electric Co., Ltd., UV emitter (UD-20-2) from Nihon Battery Co., Ltd., fluorescent lamps (FL-20BLB) from Toshiba, and H Bulb, H plus Bulb, D Bulb, Q Bulb, and M Bulb from Fusion Co., Ltd.

The irradiation dose is preferably 100 to 12,000 mJ/cm², more preferably 300 to 8,000 mJ/cm², even more preferably 500 to 6,000 mJ/cm².

### (5) Coated article

A coated article can be obtained by applying the photocurable composition to at least one surface of a substrate, directly or via at least one other layer, and irradiating light to the coating for curing to form a film.

The substrate is not particularly limited. Examples thereof include molded plastic parts, wood products, ceramics, glass, metals and composites thereof.

Also included are the foregoing substrates which are treated on their surface, specifically substrates having undergone chemical treatment, corona discharge treatment, plasma treatment, and acid or alkaline treatment. Also included are decorative plywood boards composed of a substrate and a surface layer which are coated with coating compositions of different type.

Especially when a cured film of the photocurable composition is formed on a polycarbonate substrate, the mar resistance and weather resistance of polycarbonate can be improved in some cases.

Also, a coating of the photocurable composition may be applied to the surface of a substrate having another functional layer pre-formed thereon.

Examples of the other functional layer include a primer layer, anti-rusting layer, gas barrier layer, water-proof layer, and heat ray-shielding layer. Any one or more of these layers may be previously formed on the substrate.

The coated article may be further coated, on its surface where the cured film of the photocurable composition is formed, with one or more layers such as an evaporated layer (formed by chemical vapor deposition), hard coat layer, anti-rusting layer, gas barrier layer, water-proof layer, heat ray-shielding layer, antifouling layer, photo-catalyst layer, and antistatic layer.

The coated article may be further coated on its surface opposite to its surface where the cured film of the photocurable composition is formed, with one or more layers such as a hard coat layer, anti-rusting layer, gas barrier layer, water-proof layer, heat ray-shielding layer, antifouling layer, photo-catalyst layer, and antistatic layer.

The technique of coating the photocurable composition may be selected from well-known coating techniques, for example, brush coating, spraying, dipping, flow coating, roll coating, curtain coating, spin coating, and knife coating.

In the coated article, the thickness of the cured film is not particularly limited, and may be selected as appropriate depending on a particular application. The thickness is preferably 0.1 to 50 µm, and more preferably 1 to 20 µm in order to meet the hardness, mar resistance, long-lasting adhesion, and crack resistance of the cured film. The film thickness may be adjusted by properly modifying the coating technique.

One of the characteristics of the coated article is the visible light transmission of the cured film.

The visible light transmission is generally evaluated in terms of the haze of the cured film, with a smaller haze indicating better visible light transmission. The haze may be measured by a haze meter NDH 2000 (Nippon Denshoku Industries Co., Ltd.). In general, the haze of a cured film becomes higher as the film thickness is greater.

In the coated article, the cured film preferably has a haze of up to 2.0, more preferably up to 1.0, even more preferably up to 0.7 when its thickness is up to 20 µm.

### EXAMPLES

Synthesis Examples, Examples and Comparative Examples are shown below for further illustrating the invention although the invention is not limited thereto.

### [1] Preparation of compound having incipient photopolymerization site

### [Synthesis Example 1] Synthesis of Compound (i) having incipient photopolymerization site

In a 500-mL glass reactor equipped with a stirrer and thermometer, 150 g of methyl benzoylformate, 85 g of 3-butenol, and 6 g of p-toluenesulfonic acid monohydrate were mixed and heated under reflux at 120°C for 8 hours. Thereafter, the by-product, methanol was distilled off at 100°C. The solution was cooled, combined with 200 g of toluene, and washed with 200 g of water. After similar water washing was repeated three times, the toluene layer was concentrated under reduced pressure, obtaining Compound (i) having incipient photopolymerization site.

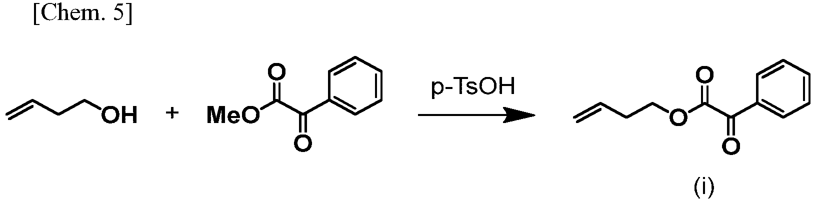

### [Synthesis Example 2] Synthesis of Compound (ii) having incipient photopolymerization site

In a 500-mL glass reactor equipped with a stirrer and thermometer, 50 g of 2,4,6-trimethylbenzoyl-diphenyl-phosphineoxide (Omnirad TPO H by IGM Resins B.V.), 37 g of N-bromosuccinimide (NBS), 0.6 g of azobisisobutyronitrile (AIBN), and 500 mL of carbon tetrachloride were mixed. In nitrogen, the mixture was heated and stirred at 80°C for 3 hours. After the reaction solution was filtered, the filtrate was distilled under reduced pressure, obtaining product (ii-1) shown below.

In a 500-mL glass reactor equipped with a stirrer and thermometer, 40 g of product (ii-1), 20 g of silver acetate, and 300 g of acetic acid were mixed and heated and stirred at 100°C for 3 hours. After the reaction solution was filtered, 500 mL of deionized water and 500 mL of toluene were added. The organic layer was recovered by separatory operation. The step of washing the organic layer with 500 mL of deionized water was repeated twice. After toluene was distilled off under reduced pressure, product (ii-2) was recovered by column chromatography using a 3:2 mixture of hexane and ethyl acetate as a developing solvent.

In a 300-mL glass reactor equipped with a stirrer and thermometer, with stirring, 20 mL of conc. hydrochloric acid was added dropwise to a mixture of 10 g of product (ii-2), 80 mL of tetrahydrofuran, and 80 mL of deionized water. The reaction solution was heated and stirred at 80°C for 12 hours, after which it was filtered. To the filtrate, 300 mL of deionized water and 300 mL of toluene were added. The organic layer was recovered by separatory operation. The step of washing the organic layer with 300 mL of deionized water was repeated twice. Thereafter, the solvent was distilled off under reduced pressure, obtaining Compound (ii) having incipient photopolymerization site.

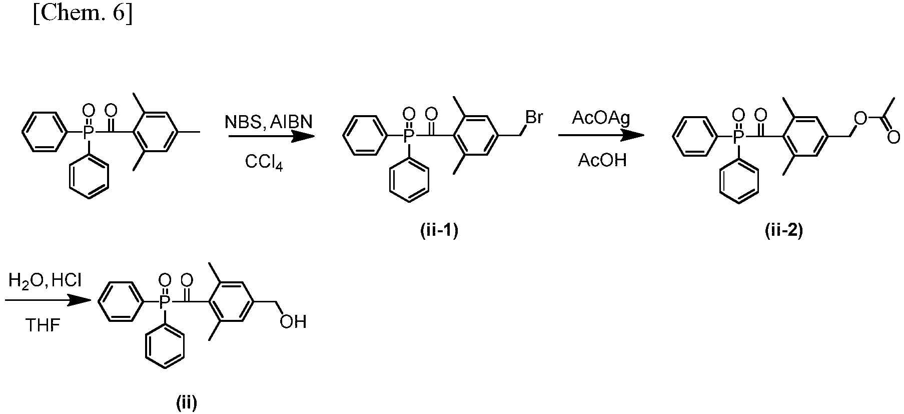

### [2] Preparation of photoreactive organopolysiloxane

### [Example 1-1]

### (1) Step of synthesizing organohydrogenpolysiloxane

In a 500-mL glass reactor equipped with a stirrer and thermometer, 84 g of 1,1,2,2-tetramethyldisiloxane, 56 g of isopropyl alcohol, 56 g of deionized water, and 122 g of conc. hydrochloric acid were mixed. The mixture was cooled at a temperature of -5°C. With stirring, 114 g of ethyl silicate ES40 (Colcoat Co., Ltd.) was added dropwise. After the mixture was stirred for 16 hours, 122 g of toluene was added to the reaction solution. The solution was stirred for 30 minutes and allowed to stand for 60 minutes. After the separated water layer was recovered, 122 g of deionized water was added to the reaction solution. The solution was stirred for 30 minutes and allowed to stand for 60 minutes. The separated water layer was recovered. Similar water washing was repeated three times to remove an acidic component. From the solution, the volatile component was distilled off under reduced pressure, obtaining an organohydrogenpolysiloxane (HMQ-1, M units/Q units = 1.6).

### (2) Step of introducing incipient photopolymerization site via hydrosilation

A 100-mL glass reactor was charged with 9.0 g of Compound (i) having incipient photopolymerization site, obtained in Synthesis Example 1, and 0.1 g of platinum catalyst (CAT-PL-50T, Shin-Etsu Chemical Co., Ltd.), which were stirred. Under nitrogen atmosphere, a mixture of 5.0 g of organohydrogenpolysiloxane (HMQ-1) and 5.0 g of toluene was added. Stirring was continued at 60°C for 3 hours. From the solution, the volatile component was distilled off under reduced pressure, obtaining liquid photoreactive organopolysiloxane (I).

### [Example 1-2]

### (1) Step of synthesizing organohydrogenpolysiloxane

In a 500-mL glass reactor equipped with a stirrer and thermometer, 8 g of 1,1,2,2-tetramethyldisiloxane, 91 g of 1,1,1,2,2,2-hexamethyldisiloxane, 56 g of isopropyl alcohol, 56 g of deionized water, and 122 g of conc. hydrochloric acid were mixed. The mixture was cooled at a temperature of -5°C. With stirring, 114 g of ethyl silicate ES40 (Colcoat Co., Ltd.) was added dropwise. After the mixture was stirred for 16 hours, 122 g of toluene was added to the reaction solution. The solution was stirred for 30 minutes and allowed to stand for 60 minutes. After the separated water layer was recovered, 122 g of deionized water was added to the reaction solution. The solution was stirred for 30 minutes and allowed to stand for 60 minutes. The separated water layer was recovered. Similar water washing was repeated three times to remove an acidic component. From the solution, the volatile component was distilled off under reduced pressure, obtaining an organohydrogenpolysiloxane (HMQ-2, M units/Q units = 1.6).

### (2) Step of introducing incipient photopolymerization site via hydrosilation

A 100-mL glass reactor was charged with 0.9 g of Compound (i) having incipient photopolymerization site, obtained in Synthesis Example 1, and 0.1 g of platinum catalyst (CAT-PL-50T, Shin-Etsu Chemical Co., Ltd.), which were stirred. Under nitrogen atmosphere, a mixture of 5.0 g of organohydrogenpolysiloxane (HMQ-2) and 5.0 g of toluene was added. Stirring was continued at 60°C for 3 hours. From the solution, the volatile component was distilled off under reduced pressure, obtaining liquid photoreactive organopolysiloxane (II).

### [Example 1-3]

Liquid photoreactive organopolysiloxane (III) was obtained by the same procedure as in Example 1-1 except that the amount of Compound (i) having incipient photopolymerization site was changed to 6 g and further 1.2 g of 1-hexene was added in the step of introducing incipient photopolymerization site via hydrosilation in Example 1-1.

### [Example 1-4]

A 100-mL glass reactor was charged with 16.1 g of Compound (ii) having incipient photopolymerization site, obtained in Synthesis Example 2, 0.02 g of diethylhydroxyamine (DEHA), and 10 g of toluene, which were stirred. Under nitrogen atmosphere, a mixture of 5.0 g of organohydrogenpolysiloxane (HMQ-1) and 5.0 g of toluene was added. The solution was heated under reflux for 10 hours to perform dehydrogenating condensation reaction. After the solution was cooled to room temperature, 0.2 g of Kyowaad 700 (Kyowa Chemical Industry Co., Ltd.) was added to the solution, which was stirred for 1 hour. After the solids were removed by filtration, the volatile component was distilled off under reduced pressure, obtaining liquid photoreactive organopolysiloxane (IV).

### [Example 1-5]

Liquid photoreactive organopolysiloxane (V) was obtained by the same procedure as in Example 1-4 except that Compound (ii) having incipient photopolymerization site was changed to 9.9 g of 1-[4-(2-hydroxyethoxy)phenyl]-2-hydroxy-2-methyl-1-propan-1-one (of formula (iii) shown below, Omnirad 2959 by IGM Resins B.V.).

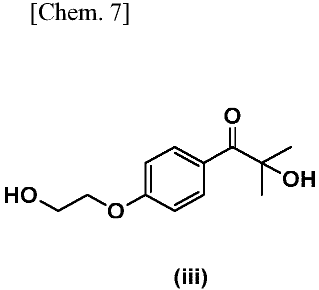

### [Comparative Example 1-1]

In a 500-mL glass reactor equipped with a stirrer and thermometer, 101 g of 1,1,1,2,2,2-hexamethyldisiloxane, 56 g of isopropyl alcohol, 56 g of deionized water, and 122 g of conc. hydrochloric acid were mixed. The mixture was cooled at a temperature of -5°C. With stirring, 114 g of ethyl silicate ES40 (Colcoat Co., Ltd.) was added dropwise. After the mixture was stirred for 16 hours, 122 g of toluene was added to the reaction solution. The solution was stirred for 30 minutes and allowed to stand for 60 minutes. After the separated water layer was recovered, 122 g of deionized water was added to the reaction solution. The solution was stirred for 30 minutes and allowed to stand for 60 minutes. The separated water layer was recovered. Similar water washing was repeated three times to remove an acidic component. From the solution, the volatile component was distilled off under reduced pressure, obtaining liquid organopolysiloxane (VI) (M/Q = 1.6).

Table 1 shows the properties of the polysiloxanes obtained in Examples and Comparative Examples. In Table 1, the content of incipient photopolymerization site is computed according to [amount of incipient photopolymerization site-bearing compound added]/[amount of organohydrogenpolysiloxane added + amount of incipient photopolymerization site-bearing compound added] × 100 (% by weight).

The number average molecular weight (Mn) is measured by gel permeation chromatography (GPC) versus polystyrene standards using tetrahydrofuran (THF) as developing solvent. The test sample was a solution of polysiloxane diluted with THF to a concentration of 0.5% by weight.

**[Table 1]**

| | Example | | | | | Comp. Ex. |
|---|---|---|---|---|---|---|
| | 1-1 | 1-2 | 1-3 | 1-4 | 1-5 | 1-1 |
| Organopolysiloxane | I | II | III | IV | V | VI |
| Number average molecular weight (Mn) | 9,600 | 2,100 | 6,100 | 5,600 | 3,900 | 1,400 |
| Content of incipient photopolymerization site (wt%) | 64 | 15 | 49 | 76 | 66 | 0 |

### [3] Preparation of photocurable composition

### [Examples 2-1 to 2-7 and Comparative Examples 2-1 to 2-5]

Photocurable compositions were prepared by dissolving 80 parts by weight of dipentaerythritol hexaacrylate (DPHA) and 20 parts by weight of 1,6-hexanediol diacrylate (HDDA) as acrylate compounds in 70 parts by weight of propylene glycol monomethyl ether (PGM) as a solvent, and mixing the solution with organopolysiloxanes I to VI obtained in Examples 1-1 to 1-5 and Comparative Example 1-1, methyl benzoylformate or 2-hydroxy-2-methyl-1-phenylpropan-1-one (Omnirad 1173 by IGM Resins B.V.)

It is noted that the content of incipient photopolymerization site is computed according to (amount of polysiloxane blended) × (content of incipient photopolymerization site)/100.

The content of polysiloxane is the amount of polysiloxane blended minus the content of incipient photopolymerization site.

**[Table 2]**

| | | Example | | | | | | | Comparative Example | | | | |
|---|---|---|---|---|---|---|---|---|---|---|---|---|---|
| | | 2-1 | 2-2 | 2-3 | 2-4 | 2-5 | 2-6 | 2-7 | 2-1 | 2-2 | 2-3 | 2-4 | 2-5 |
| DPHA | | 80 | 80 | 80 | 80 | 80 | 80 | 80 | 80 | 80 | 80 | 80 | 80 |
| HDDA | | 20 | 20 | 20 | 20 | 20 | 20 | 20 | 20 | 20 | 20 | 20 | 20 |
| PGM | | 70 | 70 | 70 | 70 | 70 | 70 | 70 | 70 | 70 | 70 | 70 | 70 |
| Organopolysiloxane | I | 1.6 | 7.8 | 15.6 | | | | | | | | | |
| | II | | | | 6.7 | | | | | | | | |
| | III | | | | | 10.2 | | | | | | | |
| | IV | | | | | | 6.6 | | | | | | |
| | V | | | | | | | 7.6 | | | | | |
| | VI | | | | | | | | | | | | 0.6 |
| Methyl benzoylformate | | | | | | | | | 1 | 5 | | | |
| Omnirad 1173 | | | | | | | | | | | 10 | 5 | |
| Content of incipient photopolymerization site (pbw) | | 1 | 5 | 10 | 1 | 5 | 5 | 5 | 1 | 5 | 10 | 5 | 0 |
| Content of polysiloxane (pbw) | | 0.6 | 2.8 | 5.6 | 5.7 | 5.2 | 1.6 | 2.6 | 0 | 0 | 0 | 0 | 0.6 |

Each of the photocurable compositions obtained in Examples 2-1 to 2-7 and Comparative Examples 2-1 to 2-5 was flow coated onto a polycarbonate plate (thickness 5 mm, tradename Takiron PC Clear-1600, C.I. Takiron Corp.), dried at 25°C for 5 minutes, and heated at 80°C for 5 minutes. Using a high-pressure mercury lamp, the coating was irradiated in air atmosphere with UV in a dose of 600 mJ/cm² (UV integral energy of wavelength 300-390 nm, as measured by Eye UV integral illuminometer UVPF-A1 (PD-365) from Iwasaki Electric Co., Ltd.). A cured film of ~15 µm thick was prepared and evaluated for cure. The physical properties (haze, yellowness index, and mar resistance) of the cured film were evaluated on the coating which was cured by UV irradiation of 1,800 mJ/cm². The results are shown in Tables 3 to 5.

### [Cure]

The sample is rated acceptable (O) when the coating was cured or unacceptable (×) when the coating remained uncured, on irradiation of the predetermined dose of UV energy.

### [Initial haze (Hz)]

Measurement was made using a haze meter NDH 5000SP (Nippon Denshoku Industries Co., Ltd.). A larger haze value indicates poor transparency. In general, a sample with a haze of at least 1% looks slightly turbid to naked eyes.

### [Yellowness index (YI)]

Transmitted light was measured by a chromatic meter Z-300A (Nippon Denshoku Industries Co., Ltd.). A greater value of YI indicates stronger yellow. In general, a sample with a YI of at least 1 is judged yellow to naked eyes.

### [Mar resistance (ΔHz)]

A sample was abraded according to ASTM 1044, by a Taber abrasion tester mounted with abrasion wheels SC-10F, under a load of 500 gf over 500 rotations. The haze of the sample was measured by a haze meter NDH 5000SP (Nippon Denshoku Industries Co., Ltd.). A difference (% point) from the haze prior to the abrasion test was computed.

**[Table 3]**

| | Content of incipient photopolymerization site (pbw) | Cure | Initial Hz (%) | YI | Mar resistance (ΔHz) |
|---|---|---|---|---|---|
| Example 2-1 | 1 | ○ | 0.46 | 0.63 | 12.5 |
| Example 2-4 | 1 | ○ | 0.43 | 0.49 | 10.4 |
| Comparative Example 2-1 | 1 | × | 0.63 | 0.87 | 12.5 |
| Comparative Example 2-5 | 0 | × | - * | - * | - * |

**[Table 4]**

| | Content of incipient photopolymerization site (pbw) | Cure | Initial Hz (%) | YI | Mar resistance (ΔHz) |
|---|---|---|---|---|---|
| Example 2-2 | 5 | ○ | 0.54 | 0.65 | 11.2 |
| Example 2-5 | 5 | ○ | 0.46 | 0.66 | 10.8 |
| Example 2-6 | 5 | ○ | 0.57 | 0.71 | 11.2 |
| Example 2-7 | 5 | ○ | 0.52 | 0.62 | 9.0 |
| Comparative Example 2-2 | 5 | ○ | 0.76 | 0.79 | 11.9 |
| Comparative Example 2-4 | 5 | ○ | 0.81 | 1.00 | 12.4 |

**[Table 5]**

| | Content of incipient photopolymerization site (pbw) | Cure | Initial Hz (%) | YI | Mar resistance (ΔHz) |
|---|---|---|---|---|---|
| Example 2-3 | 10 | ○ | 0.49 | 0.71 | 10.9 |
| Comparative Example 2-3 | 10 | ○ | 1.41 | 1.10 | 11.5 |

It is seen from Tables 3 to 5 that for the physical properties of cured films of photocurable compositions, Examples 2-1 to 2-7 falling within the scope of the invention yield coatings having better transparency and lower yellowing than any other coatings, when the effective amount of the photoinitiator is equal, as compared with Comparative Examples 2-1 to 2-5. In particular, the compositions wherein the effective amount of the photoinitiator is small as in Examples 2-1 and 2-4 exhibit satisfactory cure with a low dose of irradiation energy. The compositions wherein an equal amount of a conventional photoinitiator is added as in Comparative Example 2-1 do not cure with a low dose of irradiation energy. The compositions which are free of incipient photopolymerization site as in Comparative Example 2-5 do not show any curing behavior upon irradiation. This indicates that the compounds according to the invention show satisfactory cure in air.

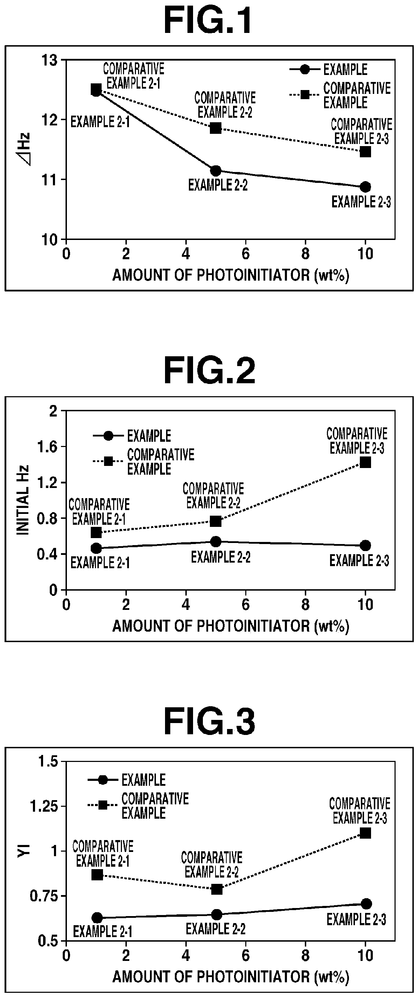

As seen from FIG. 1 showing the mar resistance versus effective photoinitiator amount relationship, the photoreactive organopolysiloxanes according to the invention are effective for improving abrasion resistance as the addition amount increases. The compositions of Comparative Examples having a conventional photoinitiator added thereto show a less improving effect. This indicates that since the inventive photoreactive organopolysiloxane has a plurality of incipient photopolymerization sites bonded to polysiloxane, the polysiloxane is incorporated in the coating structure as crosslinking points, whereby the crosslinking density of the coating is increased so that mar resistance is effectively improved.

As seen from FIG. 2 showing the initial Hz versus effective photoinitiator amount relationship, the photoreactive organopolysiloxanes according to the invention ensure that the coatings do not substantially change their transparency even when the addition amount is increased. The compositions of Comparative Examples having a conventional photoinitiator added thereto show a substantial loss of transparency as the addition amount is increased. This is accounted for by the phenomenon that when a large amount of a conventional photoinitiator is added, much unreacted components remain and phase separation of these components takes place with a progress of cure of coatings. Since the inventive photoreactive organopolysiloxane has a plurality of incipient photopolymerization sites bonded to polysiloxane, phase separation of unreacted components is restrained. As a result, satisfactory transparency is obtained.

As seen from FIG. 3 showing the YI versus effective photoinitiator amount relationship, the photoreactive organopolysiloxanes according to the invention ensure that coatings undergo no substantial progress of yellowing even when the addition amount is increased. The compositions of Comparative Examples having a conventional photoinitiator added thereto show a substantial progress of yellowing as the addition amount is increased. This phenomenon arises for the reason that when a large amount of a conventional photoinitiator is added, reactions take place among unreacted and reacted components to form much by-products which cause yellowing. Since the inventive organopolysiloxane has a plurality of incipient photopolymerization sites bonded to polysiloxane, the unreacted and reacted components are so low in mobility and diffusibility that the formation of by-products which cause yellowing is restrained.

It has been demonstrated that the compound falling within the scope of the invention is effective for a coating to cure in air even when the effective amount of a photoinitiator is small and successful in imparting excellent transparency and low yellowness.

## Claims

1. A photoreactive organopolysiloxane having a constituent unit ratio represented by the formula (1) and containing 1 to 90% by weight of an incipient photopolymerization site-bearing group,
(R¹₃SiO_{1/2})ₐ(R¹₂SiO_{2/2})_{b}(R¹SiO_{3/2})_{c}(SiO_{4/2})_{d} (1)
wherein R¹ is each independently an optionally substituted C₁-C₂₀ alkyl or C₆-C₂₀ aryl group or an incipient photopolymerization site-bearing group, a is a number of 0.1 to 0.8, b is a number of 0 to 0.5, c is a number of 0 to 0.5, and d is a number of 0.2 to 0.9, meeting a+b+c+d=1.

2. The photoreactive organopolysiloxane of claim 1 wherein the incipient photopolymerization site-bearing group is a group having any one of the formulae (2) to (7): 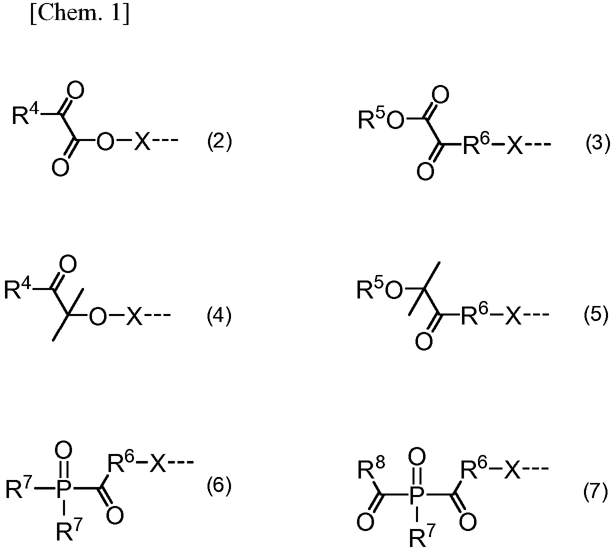 wherein R⁴ is an optionally substituted C₆-C₂₀ aryl group, R⁵ is hydrogen or an optionally substituted C₁-C₂₀ alkyl or C₆-C₂₀ aryl group, R⁶ is an optionally substituted C₆-C₂₀ arylene group, R⁷ is halogen or an optionally substituted C₁-C₂₀ alkyl, C₂-C₂₀ alkenyl or C₆-C₂₀ aryl group, R⁸ is an optionally substituted C₆-C₂₀ aryl group or a group: -R⁶-SiR²₍₃₋ₙ₎R³ₙ wherein R² is each independently hydrogen or an optionally substituted C₁-C₂₀ alkyl, C₂-C₂₀ alkenyl or C₆-C₂₀ aryl group, R³ is each independently hydroxy, a C₁-C₆ alkoxy group or halogen, R⁶ is as defined above, n is an integer of 1 to 3, X is a single bond or an optionally substituted C₁-C₂₀ alkylene group which may contain an ether, ester, amide, urethane, urea, sulfide or sulfoxide structure in the chain, and the broken line designates a point of attachment to a silicon atom.

3. The photoreactive organopolysiloxane of claim 1 or 2, containing 15 to 80% by weight of the photopolymerization incipient site-bearing group.

4. The photoreactive organopolysiloxane of claim 1 wherein a is a number of 0.3 to 0.7, b is a number of 0 to 0.2, c is a number of 0 to 0.2, and d is a number of 0.3 to 0.7.

5. The photoreactive organopolysiloxane of claim 1 wherein b and c are 0.

6. A method of preparing a photoreactive organopolysiloxane comprising the step of reacting an organohydrogenpolysiloxane having a constituent unit ratio represented by the formula (8) with at least one compound selected from incipient photopolymerization site-bearing compounds represented by the formulae (9) to (14), wherein
the amount of the incipient photopolymerization site-bearing compounds represented by the formulae (9) to (14) is 1 to 90% by weight based on the total of the organohydrogenpolysiloxane having a constituent unit ratio represented by formula (8) and the incipient photopolymerization site-bearing compounds represented by formulae (9) to (14),
(R⁹₃SiO_{1/2})ₐ(R⁹₂SiO_{2/2})_{b}(R⁹SiO_{3/2})_{c}(SiO_{4/2})_{d} (8)
wherein R⁹ is each independently an optionally substituted C₁-C₂₀ alkyl or C₆-C₂₀ aryl group or hydrogen, a is a number of 0.1 to 0.8, b is a number of 0 to 0.5, c is a number of 0 to 0.5, and d is a number of 0.2 to 0.9, meeting a+b+c+d=1, 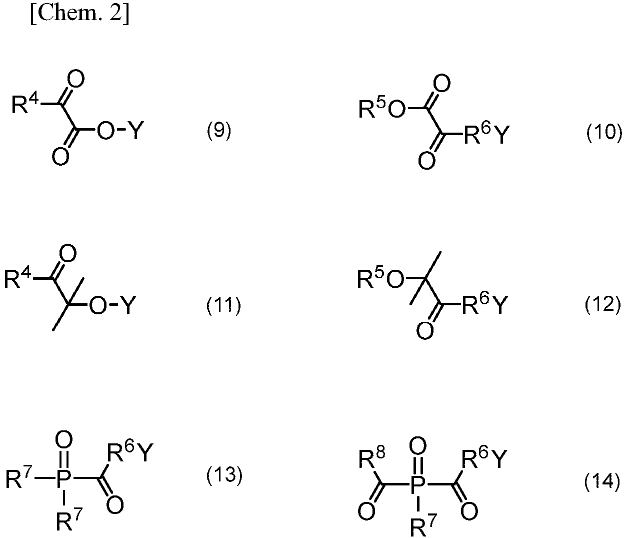 wherein R⁴ is an optionally substituted C₆-C₂₀ aryl group, R⁵ is hydrogen or an optionally substituted C₁-C₂₀ alkyl or C₆-C₂₀ aryl group, R⁶ is an optionally substituted C₆-C₂₀ arylene group, R⁷ is halogen or an optionally substituted C₁-C₂₀ alkyl, C₂-C₂₀ alkenyl or C₆-C₂₀ aryl group, R⁸ is an optionally substituted C₆-C₂₀ aryl group or a group: -R⁶-SiR²₍₃₋ₙ₎R³ₙ wherein R² is each independently hydrogen or an optionally substituted C₁-C₂₀ alkyl, C₂-C₂₀ alkenyl or C₆-C₂₀ aryl group, R³ is each independently hydroxy, a C₁-C₆ alkoxy group or halogen, R⁶ is as defined above, n is an integer of 1 to 3, and Y is an optionally substituted C₂-C₂₀ alkenyl or C₁-C₂₀ hydroxyalkyl group which may contain an ether, ester, amide, urethane, urea, sulfide or sulfoxide structure in the chain.

7. The method of preparing a photoreactive organopolysiloxane of claim 6 wherein the amount of the incipient photopolymerization site-bearing compounds represented by the formulae (9) to (14) is 15 to 80% by weight based on the total of the organohydrogenpolysiloxane having a constituent unit ratio represented by formula (8) and the incipient photopolymerization site-bearing compounds represented by formulae (9) to (14).

8. The method of preparing a photoreactive organopolysiloxane of claim 6 wherein a is a number of 0.3 to 0.7, b is a number of 0 to 0.2, c is a number of 0 to 0.2, and d is a number of 0.3 to 0.7.

9. The method of preparing a photoreactive organopolysiloxane of claim 6 wherein b and c are 0.

10. The method of preparing a photoreactive organopolysiloxane of claim 6, comprising the step of effecting hydrosilation reaction of an organohydrogenpolysiloxane having a constituent unit ratio represented by formula (8) with at least one compound selected from incipient photopolymerization site-bearing compounds represented by formulae (9) to (14), wherein
Y is an optionally substituted C₂-C₂₀ alkenyl group which may contain an ether, ester, amide, urethane, urea, sulfide or sulfoxide structure in the chain.

11. The method of preparing a photoreactive organopolysiloxane of claim 6, comprising the step of effecting dehydrogenating condensation reaction of an organohydrogenpolysiloxane having a constituent unit ratio represented by the formula (8) with at least one compound selected from incipient photopolymerization site-bearing compounds represented by the formulae (9) to (14), wherein
Y is an optionally substituted C₁-C₂₀ hydroxyalkyl group which may contain an ether, ester, amide, urethane, urea, sulfide or sulfoxide structure in the chain.

12. The method of preparing a photoreactive organopolysiloxane of claim 6, comprising the step of effecting hydrosilation reaction of a compound having an aliphatic unsaturated bond, but not an incipient photopolymerization site with an organohydrogenpolysiloxane having a constituent unit ratio represented by formula (8), or the reaction product of an organohydrogenpolysiloxane having a constituent unit ratio represented by formula (8) with at least one compound selected from incipient photopolymerization site-bearing compounds represented by formulae (9) to (14).

13. The method of preparing a photoreactive organopolysiloxane of claim 6, comprising the step of effecting dehydrogenating condensation reaction of a compound having a hydroxy group, but not an incipient photopolymerization site with an organohydrogenpolysiloxane having a constituent unit ratio represented by formula (8), or the reaction product of an organohydrogenpolysiloxane having a constituent unit ratio represented by formula (8) with at least one compound selected from incipient photopolymerization site-bearing compounds represented by formulae (9) to (14).

14. A photocurable composition comprising the photoreactive organopolysiloxane of claim 1 and a compound having a radical polymerizable unsaturated bond.

15. A cured product obtained by curing the photocurable composition of claim 14.
